# EUROPEAN PATENT APPLICATION

(11) **EP 4 847 349 A1**
(43) Date of publication of application: **02.12.2026**
(21) Application number: 26180654.1
(22) Date of filing: 22.05.2026
(51) Int. Cl.: B62D 21/15, B62D 25/02, B62D 29/00, B62D 35/02

(54) **VEHICLE LOWER PORTION STRUCTURE**

(30) Priority: 26.05.2025 JP 2025087359
(71) Applicant: Toyota Jidosha Kabushiki Kaisha, Toyota-shi, Aichi-ken 471-8571 (JP)
(72) Inventor: HIGASHIHARA, Katsunori, Toyota-shi, Aichi-ken 471-8571 (JP)
(74) Representative: Cabinet Beau de Loménie

(57) **Abstract**

A vehicle lower portion structure includes a pair of left and right frame portions (14, 38, 40), a battery pack (16), and a cross member (28). Each frame portion has a first closed cross-sectional member (38) and a second closed cross-sectional member (40). The first closed cross-sectional member (38) is structured to include a first load transmitting portion (50) that extends along a vehicle transverse direction, that is disposed at a position overlapping the cross member (28) in a vehicle vertical direction as seen in a vehicle side view, and that can transmit a load. The second closed cross-sectional member (40) is structured to include a second load transmitting portion (74) that extends along the vehicle transverse direction, that is disposed at a position overlapping the first load transmitting portion (50) in the vehicle vertical direction as seen in a vehicle side view, and that can transmit a load.

## Description

### BACKGROUND

### Technical Field

The present disclosure relates to a vehicle lower portion structure.

### Related Art

U.S. Patent Application No. 2013/0088044 discloses a structure in which cross members that extend in the transverse direction at further toward the vehicle upper side than a battery pack, and reinforcing members that transverse the interiors of side sills (also called rockers) that extend in the vehicle longitudinal direction at further toward vehicle transverse direction outer sides than the battery pack, are disposed at positions that overlap in the vehicle vertical direction as seen in a vehicle side view.

In this related art, owing to such a structure, load at the time of a side collision of the vehicle is absorbed and dispersed at the entire vehicle by the side sill and the cross members, and impact to the battery cells accommodated within the battery pack is mitigated.

However, in the above-described related art, at the time of a collision of a collision body such as a pole with a side sill from a vehicle lateral side (a so-called pole side collision), there is a possibility that a large load at the initial stage of the collision (hereinafter called "load at the initial stage of the collision") will be inputted from the lower wall portion of the side sill via a fastening portion toward the battery pack side.

### SUMMARY

The present disclosure provides a vehicle lower portion structure that, at the time of a side collision of a vehicle, can suppress the load of the initial stage of the collision such that load is not inputted toward a battery pack side.

A vehicle lower portion structure relating to a first aspect has: a pair of left and right frame portions that are provided at a lower portion of, and at vehicle transverse direction both side portions of, a vehicle, and that extend in a vehicle longitudinal direction; a first closed cross-sectional member that is disposed at a vehicle transverse direction inner side of a frame portion main body, that, in a cross-sectional shape cut along the vehicle transverse direction and a vehicle vertical direction, structures a first closed cross-sectional portion, and to which the battery pack is fixed; and a second closed cross-sectional member that is disposed further toward a vehicle transverse direction outer side than the first closed-cross-sectional member, and that, in a cross-sectional shape cut along the vehicle transverse direction and the vehicle vertical direction, structures a second closed cross-sectional portion, wherein the first closed cross-sectional member is structured to include a first load transmitting portion that extends along the vehicle transverse direction, that is disposed at a position overlapping the cross member in the vehicle vertical direction as seen in a vehicle side view, and that can transmit a load, and wherein the second closed cross-sectional member is structured to include a second load transmitting portion that extends along the vehicle transverse direction, that is disposed at a position overlapping the first load transmitting portion in the vehicle vertical direction as seen in a vehicle side view, and that can transmit a load.

The vehicle lower portion structure relating to the first aspect has the pair of left and right frame portions, a battery pack, and a cross member. The pair of left and right frame portions are provided at the lower portion of and at the vehicle transverse direction both side portions of the vehicle, and extend in the vehicle longitudinal direction. The battery pack is disposed between the pair of left and right frame portions. The cross member is disposed further toward the vehicle vertical direction upper side than the battery pack, and extends in the vehicle transverse direction. Both end portions of the cross member in the extending direction thereof are connected to the pair of left and right frame portions respectively.

The frame portion has a first closed cross-sectional member and a second closed cross-sectional member. The first closed cross-sectional member is disposed at the vehicle transverse direction inner side of the frame portion main body. In a cross-sectional shape that is cut along the vehicle transverse direction and the vehicle vertical direction, the first closed cross-sectional member structures a first closed cross-sectional portion. The battery pack is fixed to the first closed cross-sectional member. On the other hand, the second closed cross-sectional member is disposed at the vehicle transverse direction outer side of the first closed-cross-sectional member. In a cross-sectional shape that is cut along the vehicle transverse direction and the vehicle vertical direction, the second closed cross-sectional member structures a second closed cross-sectional portion.

Further, the first closed cross-sectional member is structured to include a first load transmitting portion. This first load transmitting portion extends in the vehicle transverse direction, and is disposed at a position overlapping the cross member in the vehicle vertical direction as seen in a vehicle side view, and can transmit load. On the other hand, the second closed cross-sectional member is structured to include a second load transmitting portion. The second load transmitting portion extends in the vehicle transverse direction, and is disposed at a position overlapping, in the vehicle vertical direction as seen in a vehicle side view, the first load transmitting portion that is provided at the first closed cross-sectional member, and the second load transmitting portion can transmit load.

Namely, in the first aspect, at the frame portion, the second closed cross-sectional member and the first closed cross-sectional member are provided in that order from the vehicle transverse direction outer side. The second load transmitting portion provided at the second closed cross-sectional member, the first load transmitting portion provided at the first closed cross-sectional member, and the cross member overlap in the vehicle vertical direction as seen in a vehicle side view.

Therefore, in the present aspect, at the time of a side collision of the vehicle, the load at the initial stage of the collision is inputted to the second closed cross-sectional member that is provided at the vehicle transverse direction outer side at the frame portion. The load inputted to the second closed cross-sectional member is transmitted from the second load transmitting portion of the second closed cross-sectional member to the first load transmitting portion of the first closed cross-sectional member. Then, the load transmitted to the first load transmitting portion is transmitted via the first load transmitting portion to the cross member.

In this way, in the present aspect, when the load of the initial stage of the collision is transmitted to the cross member, reaction force from the cross member is obtained, and the first closed cross-sectional member and the second closed cross-sectional member that structure the frame portion deform, and the collision energy can be absorbed effectively. Namely, in the present aspect, at the time of a side collision of the vehicle, due to the load in the initial stage of the collision being transmitted toward the cross member side, the load can be suppressed so as to not be transmitted toward the battery pack side, and the battery pack can be protected.

Here, it suffices for the "frame portions" to be members that are provided at the lower portion of and at the vehicle transverse direction both sides of the vehicle, and that extend in the vehicle longitudinal direction. There are cases in which these "frame portions" are called rockers, side frames, side reinforcements or the like.

Further, the "first closed cross-sectional member" and the "second closed cross-sectional member" do not necessarily have to have completely closed cross-sectional shapes. For example, hole portions may be formed therein at portions fastened to other members. Moreover, the first closed cross-sectional member and the second closed cross-sectional member may be molded integrally, or may be molded as separate parts respectively. In a case in which the first closed cross-sectional member and the second closed cross-sectional member are molded as separate parts, the first closed cross-sectional member and the second closed cross-sectional member are made integral after molding, and may be joined together directly or may be joined together via an intermediary member.

Moreover, the "cross member" is a member whose end portions in the extending direction thereof are connected to the frame portions, but the method of connection is not particularly limited. For example, the end portions of the cross member may be directly connected to the frame portions by planar joining by welding or the like, or the end portions of the cross member may be indirectly joined to the frame portions via connecting members such as brackets.

In a vehicle lower portion structure relating to a second aspect, in the vehicle lower portion structure relating to the first aspect, a first lower wall portion that structures a lower end portion of the first closed cross-sectional member is disposed further toward a vehicle vertical direction lower side than a second lower wall portion that structures a lower end portion of the second closed cross-sectional member.

In the vehicle lower portion structure relating to the second aspect, the first lower wall portion of the first closed cross-sectional member is disposed further toward the vehicle vertical direction lower side than the second lower wall portion of the second closed cross-sectional member. Due thereto, in the present aspect, at the first closed cross-sectional member, the functions are divided between an upper portion side of the first closed cross-sectional member that is further toward the upper side in the vehicle vertical direction than the second lower wall portion of the second closed cross-sectional member, and a lower portion side of the first closed cross-sectional member that is further toward the lower side than the second lower wall portion.

Namely, in the present aspect, at the time of a side collision of the vehicle, at the upper portion side of the first closed cross-sectional member, it is made such that load is transmitted, and collision energy is absorbed, and, at the lower portion side of first closed cross-sectional member, it is made such that load is not transmitted, and the battery pack can be protected.

In a vehicle lower portion structure relating to a third aspect, in the vehicle lower portion structure relating to the first aspect or the second aspect, the second load transmitting portion is a second lower wall portion that structures a lower end portion of the second closed cross-sectional member.

In the vehicle lower portion structure relating to the third aspect, the second load transmitting portion is the second lower wall portion of the second closed cross-sectional member. At the time of a side collision of the vehicle, the load in the initial stage of the collision that is inputted to the second closed cross-sectional member is transmitted from the second lower wall portion of the second closed cross-sectional member to the first load transmitting portion of the first closed cross-sectional member.

Due thereto, in the present aspect, at the time of a side collision of the vehicle, it can be made such that load is transmitted to the upper portion side of the first closed cross-sectional member, and it can be made such that load is not transmitted to the lower portion side of the first closed cross-sectional member, and the battery pack can be protected.

In a vehicle lower portion structure relating to a fourth aspect, in the vehicle lower portion structure relating to any one of the first aspect through the third aspect, a plate thickness of the first load transmitting portion is thicker than a plate thickness of the second load transmitting portion.

In the vehicle lower portion structure relating to the fourth aspect, the plate thickness of the first load transmitting portion is thicker than the plate thickness of the second load transmitting portion. Therefore, at the time of a side collision of the vehicle, when the collision load is transmitted via the first load transmitting portion to the cross member, and reaction force is received from the cross member, the second load transmitting portion side deforms before the first load transmitting portion side.

In this way, in the present aspect, when the second load transmitting portion deforms, collision energy is absorbed (so-called EA). Accordingly, in the present aspect, due to the second load transmitting portion side being deformed before the first load transmitting portion side, at the time of a side collision of the vehicle, energy can be absorbed in order from the vehicle transverse direction outer side at the frame portion.

In a vehicle lower portion structure relating to a fifth aspect, in the vehicle lower portion structure relating to any one of the first aspect through the fourth aspect, in a cross-sectional shape that is cut along the vehicle transverse direction and the vehicle vertical direction, the first load transmitting portion is curved toward an upper side or a lower side in the vehicle vertical direction or is inclined with respect to a direction intersecting the vehicle transverse direction.

In the vehicle lower portion structure relating to the fifth aspect, in the cross-sectional shape that is cut along the vehicle transverse direction and the vehicle vertical direction, the first load transmitting portion is curved toward the upper side or the lower side in the vehicle vertical direction, or is inclined with respect to a direction intersecting the vehicle transverse direction.

In this way, in the present aspect, the first load transmitting portion is curved or inclined toward a predetermined direction. Due thereto, in the present aspect, as compared with a case in which the first load transmitting portion extends in the vehicle transverse direction and the vehicle longitudinal direction, the first load transmitting portion can be deformed toward a predetermined direction, and the collision energy absorbing ability can be improved.

In a vehicle lower portion structure relating to a sixth aspect, in the vehicle lower portion structure relating to any one of the first aspect through the fifth aspect, in a cross-sectional shape that is cut along the vehicle transverse direction and the vehicle vertical direction, the first load transmitting portion is curved toward a vehicle vertical direction lower side or is inclined toward a vehicle vertical direction lower side on progression toward a vehicle transverse direction outer side.

In the vehicle lower portion structure relating to the sixth aspect, the first load transmitting portion is curved toward the vehicle vertical direction lower side, or is inclined toward the vehicle vertical direction lower side on progression toward the vehicle transverse direction outer side. Due thereto, the deformation mode of the first load transmitting portion is controlled, and the collision energy absorbing ability can be improved.

In a vehicle lower portion structure relating to a seventh aspect, in the vehicle lower portion structure relating to any one of the first aspect through the sixth aspect, an upper wall portion that structures an upper end portion of the second closed cross-sectional member, and a second lower wall portion that structures a lower end portion of the second closed cross-sectional member, are curved toward an upper side or a lower side in the vehicle vertical direction or are inclined with respect to directions intersecting the vehicle transverse direction.

In the vehicle lower portion structure relating to the seventh aspect, the upper wall portion of the second closed cross-sectional member and the second lower wall portion of the second closed cross-sectional member are curved toward the upper side or the lower side in the vehicle vertical direction, or are inclined with respect to directions intersecting the vehicle transverse direction.

In this way, in the present aspect, the upper wall portion and the second lower wall portion of the second closed cross-sectional member are curved or inclined toward predetermined directions. Due thereto, in the present aspect, at the time of a side collision of the vehicle, the second load transmitting portion can be deformed toward a predetermined direction, as compared with a case in which the upper wall portion and the second lower wall portion of the second closed cross-sectional member extend in the vehicle transverse direction and the vehicle longitudinal direction. As a result, in the present aspect, at the time of a side collision of the vehicle, the second closed cross-sectional member penetrating in toward the side of the battery pack that is fixed to the first closed cross-sectional member can be suppressed.

In a vehicle lower portion structure relating to an eighth aspect, in the vehicle lower portion structure relating to any one of the first aspect through the seventh aspect, an upper wall portion that structures an upper end portion of the second closed cross-sectional member is curved toward a vehicle vertical direction lower side or is inclined toward a vehicle vertical direction lower side on progression toward a vehicle transverse direction outer side, and a second lower wall portion that structures a lower end portion of the second closed cross-sectional member is curved toward a vehicle vertical direction upper side or is inclined toward a vehicle vertical direction upper side on progression toward the vehicle transverse direction outer side.

In the vehicle lower portion structure relating to the eighth aspect, the upper wall portion of the second closed cross-sectional member is curved toward the vehicle vertical direction lower side or is inclined toward the vehicle vertical direction lower side on progression toward the vehicle transverse direction outer side. Moreover, the second lower wall portion of the second closed cross-sectional member is curved toward the vehicle vertical direction upper side or is inclined toward the vehicle vertical direction upper side on progression toward the vehicle transverse direction outer side.

Due thereto, in the present aspect, at the time of a side collision of the vehicle, the upper wall portion of the second closed cross-sectional member is deformed toward the vehicle vertical direction lower side, and the second lower wall portion of the second closed cross-sectional member is deformed toward the vehicle vertical direction upper side. Namely, in the present aspect, at the time of a side collision of the vehicle, the deformation mode of the second closed cross-sectional member is controlled, and the upper wall portion and the second lower wall portion can be deformed toward the interior of the second closed cross-sectional portion.

In the present aspect, due to the upper wall portion and the second lower wall portion of the second closed cross-sectional member being bent toward the inner side of the second closed cross-sectional member at the time of a side collision in this way (so-called inward bending), the second closed cross-sectional member penetrating in toward the side of the battery pack that is fixed to the first closed cross-sectional member can be suppressed.

In a vehicle lower portion structure relating to a ninth aspect, in the vehicle lower portion structure relating to any one of the first aspect through the eighth aspect, the first closed cross-sectional member is structured to further include a third load transmitting portion that, in the vehicle vertical direction and as seen in a vehicle side view, overlaps the cross member and an upper wall portion that structures an upper end portion of the second closed cross-sectional member.

In the vehicle lower portion structure relating to the ninth aspect, the first closed cross-sectional member is structured to further include a third load transmitting portion. The third load transmitting portion overlaps the upper wall portion of the second closed cross-sectional member and the cross member in the vehicle vertical direction as seen in a vehicle side view.

Due thereto, in the present aspect, at the time of a side collision of the vehicle, the load at the initial stage of the collision that is inputted to the second closed cross-sectional member is transmitted from the second lower wall portion of the second closed cross-sectional member to the first load transmitting portion of the first closed cross-sectional member, and is transmitted from the upper wall portion of the second closed cross-sectional member to the third load transmitting portion of the first closed cross-sectional member. Then, the load is transmitted to the cross member via the first load transmitting portion and the third load transmitting portion of the first closed cross-sectional member, respectively. Namely, in the present aspect, the ability to transmit load to the cross member improves.

In a vehicle lower portion structure relating to a tenth aspect, in the vehicle lower portion structure relating to any one of the first aspect through the ninth aspect, a first weak portion, whose rigidity is lower than other regions of the first closed cross-sectional member, is formed at the first closed cross-sectional member at a vertical wall portion that is provided between the first closed cross-sectional portion and the second closed cross-sectional portion.

In the vehicle lower portion structure relating to the tenth aspect, the first weak portion is provided at the first closed cross-sectional member. The first weak portion is formed at a vertical wall portion that is provided between the first closed cross-sectional portion and the second closed cross-sectional portion provided at the second closed cross-sectional member. The rigidity of the first weak portion is lower than other regions of the first closed cross-sectional member.

Therefore, in the present aspect, at the time of a side collision of the vehicle, the first closed cross-sectional member breaks with the first weak portion being the point of origin. Due thereto, the vertical wall portion of the first closed cross-sectional member can be bent inwardly, and it can be made such that the deformation between the first closed cross-sectional member and the second closed cross-sectional member is not impeded, and collision energy can be absorbed efficiently. Note that a cut-out portion, a thin-walled portion, a through-hole or the like is formed in the vertical wall portion as the "first weak portion".

In a vehicle lower portion structure relating to an eleventh aspect, in the vehicle lower portion structure relating to any one of the first aspect through the tenth aspect, a spacer, which is disposed at a position overlapping the second closed cross-sectional member in the vehicle vertical direction as seen in a vehicle side view and which can transmit load, is provided further toward a vehicle transverse direction outer side than the second closed cross-sectional member.

In the vehicle lower portion structure relating to the eleventh aspect, a spacer is provided further toward the vehicle transverse direction outer side than the second closed cross-sectional member. The spacer is disposed at a position overlapping the second closed cross-sectional member in the vehicle vertical direction as seen in a vehicle side view, and can transmit load.

Therefore, in the present aspect, at the time of a side collision of the vehicle, the load in the initial stage of the collision is inputted via the spacer to the second closed cross-sectional member of the frame portion, and is transmitted to the first closed cross-sectional member via this second closed cross-sectional member. Then, the load transmitted to the first closed cross-sectional member is transmitted to the cross member via the first load transmitting portion of the first closed cross-sectional portion. Namely, in the present aspect, the load in the initial stage of the collision can be reliably transmitted via the spacer to the second closed cross-sectional member, and the ability to transmit load toward the cross member side improves, and collision energy can be absorbed efficiently.

Further, in the present aspect, movement, toward the vehicle transverse direction inner side, of the side door that is provided at the vehicle side portion is limited by the spacer, and the lower side portion of the side door can be restrained so as to not abut the battery pack.

In a vehicle lower portion structure relating to a twelfth aspect, in the vehicle lower portion structure relating to any one of the first aspect through the eleventh aspect, the first closed cross-sectional member and the second closed cross-sectional member are molded integrally.

In the vehicle lower portion structure relating to the twelfth aspect, due to the first closed cross-sectional member and the second closed cross-sectional member being molded integrally, a reduction in the number of parts can be devised, and assembly work for assembling the second closed cross-sectional member to the first closed cross-sectional member is omitted.

In a vehicle lower portion structure relating to a thirteenth aspect, in the vehicle lower portion structure relating to any one of the first aspect through the twelfth aspect, a second weak portion, whose rigidity is lower than other regions of the first closed cross-sectional member, is formed at the first closed cross-sectional member at a position further toward a vehicle transverse direction outer side than a fixing point at which the battery pack is fixed.

In the vehicle lower portion structure relating to the thirteenth aspect, the second weak portion is provided at the first closed cross-sectional member. At a position that is further toward the vehicle transverse direction outer side than a fixing point where the battery pack is fixed, the rigidity of the second weak portion is lower than that of other regions of the first closed cross-sectional member.

Therefore, in the present aspect, at the time of a side collision of the vehicle, the first closed cross-sectional member breaks with the second weak portion being the point of origin. Because the second weak portion is provided at a position that is further toward the vehicle transverse direction outer side than the fixing point at which the battery pack is fixed, at the time of a side collision of the vehicle, it is possible to suppress the load such that load is not transmitted via the fixing point toward the battery pack side. Note that a cut-out portion, a thin-walled portion, a through-hole or the like is formed in the first closed cross-sectional member as the "second weak portion".

As described above, the vehicle lower portion structure relating to the present disclosure can, at the time of a side collision of a vehicle, suppress the load at the initial stage of the collision such that load is not inputted toward the battery pack side.

### BRIEF DESCRIPTION OF THE DRAWINGS

An exemplary embodiment of the present disclosure will be described in detail based on the following figures, wherein:
Fig. 1 is a cross-sectional view cut along a vehicle transverse direction and a vehicle vertical direction and illustrating a left side of a vehicle to which a vehicle lower portion structure relating to a present embodiment is applied;
Fig. 2 is a cross-sectional view, corresponding to Fig. 1, for explaining operation of the vehicle to which the vehicle lower portion structure relating to the present embodiment is applied;
Fig. 3 is a cross-sectional view cut along the vehicle transverse direction and the vehicle vertical direction and illustrating modified example 3 of a rocker that structures a portion of the vehicle lower portion structure relating to the present embodiment;
Fig. 4 is a cross-sectional view cut along the vehicle transverse direction and the vehicle vertical direction, for explaining operation of the vehicle to which the vehicle lower portion structure relating to the present embodiment is applied;
Fig. 5 is a schematic drawing schematically illustrating the structure of the vehicle to which the vehicle lower portion structure relating to the present embodiment is applied;
Fig. 6 is a schematic drawing corresponding to Fig. 5 and illustrating modified example 1 of the vehicle to which the vehicle lower portion structure relating to the present embodiment is applied; and
Fig. 7 is a schematic drawing corresponding to Fig. 5 and illustrating modified example 2 of the vehicle to which the vehicle lower portion structure relating to the present embodiment is applied.

### DETAILED DESCRIPTION

A vehicle to which a vehicle lower portion structure relating to an embodiment of the present disclosure is applied is described hereinafter by using the drawings. Note that arrow UP and arrow LH that are shown appropriately in the respective drawings indicate the vehicle upward direction and leftward direction, respectively. Hereinafter, when description is given by using merely longitudinal (front-rear), left-right and vertical (up-lower) directions, they refer to the longitudinal of the vehicle longitudinal direction, the left and right of the vehicle left-right direction (vehicle transverse direction), and the vertical of the vehicle vertical direction, unless otherwise specified. Further, there are cases in which some reference numerals are omitted from the respective drawings in order to make the drawings easy to understand.

### Structure of Vehicle Lower Portion Structure

First, the structure of the vehicle lower portion structure is described.

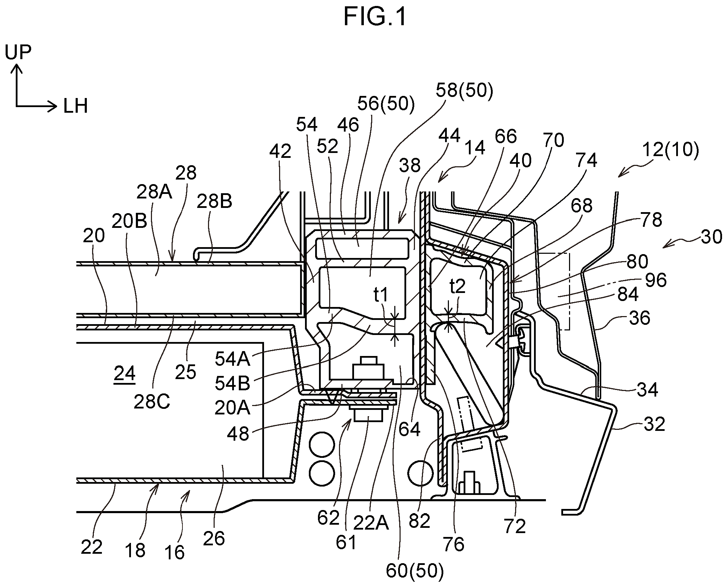

Fig. 1 is a cross-sectional view of the left side of a vehicle 10, to which the vehicle lower portion structure relating to the present embodiment is applied, which cross-section is cut along the vehicle transverse direction and the vehicle vertical direction. Note that the vehicle 10 is, for example, an electric vehicle, a gasoline-hybrid vehicle or a fuel cell hybrid vehicle that travels by using a motor as the drive source thereof.

As illustrated in Fig. 1, the vehicle 10 includes a pair of left and right rockers (frame main body portions, frame portions) 14 that extend along the vehicle longitudinal direction at a lower portion 12 of the vehicle 10 (hereinafter called "vehicle lower portion 12"), and that are disposed at the vehicle transverse direction both sides. A battery pack 16 is provided between the pair of left and right rockers 14.

The battery pack 16 has a battery case 18 that is formed in the shape of a box whose length direction is the vehicle longitudinal direction and that is flat in the vehicle vertical direction. The battery case 18 is structured to include an upper case 20 and a lower case 22. The upper case 20 and the lower case 22 are formed by, for example, plate members formed of a light metal such as an aluminum alloy being press molded.

The cross-sectional shapes, which are cut along the vehicle transverse direction and vehicle vertical direction, of the upper case 20 and the lower case 22 are hat-shaped. The lower side of the upper case 20 is open, and a flange portion 20A juts out from the open end toward the outer side of the upper case 20. Further, the upper side of the lower case 22 is open, and a flange portion 22A juts out from the open end toward the outer side of the lower case 22.

Plural battery cells 26 that are prismatic are accommodated within a space portion 24 formed by the upper case 20 and the lower case 22. Further, the flange portion 20A formed at the upper case 20 and the flange portion 22A formed at the lower case 22 are joined together, and the interior of the space portion 24 is sealed.

In the present embodiment, a floor portion 25 is provided at an upper wall portion 20B of the upper case 20. Cross members 28 extend along the vehicle transverse direction at the upper surface of the floor portion 25. Both end portions in the vehicle transverse direction (the extending directions) of the cross members 28 are connected to the rockers 14, respectively. Note that a floor panel that structures the floor portion 25 may, of course, be provided separately from the upper wall portion 20B of the upper case 20. In this case, the vehicle transverse direction both end portions of the floor panel are connected to the rockers 14, respectively.

On the other hand, side member outer panels (hereinafter called "side member outers") 32 that structure design surfaces are provided at vehicle side portions 30. Door opening portions 34 are formed in the vehicle longitudinal direction central portions of the side member outers 32, and side doors 36 are provided at the door opening portions 34 so as to be able to open and close.

### Cross Members

The cross members 28 are described here.

The cross members 28 in the present embodiment include a cross member for seats that supports the front seats. From the standpoint of rigidity, the cross member for seats and the other cross members that are not for seats may have different shapes, but these cross members are the same with regard to the point that both end portions thereof in the vehicle transverse direction (the extending directions) are connected to the rockers 14 respectively.

Note that the cross member 28 that is illustrated in Fig. 1 is the cross member for seats. For example, this cross member 28 is formed of a metal such as an aluminum alloy, and is formed by extrusion or drawing, and the cross-sectional shape thereof that is cut along the vehicle longitudinal direction and the vehicle vertical direction is rectangular.

The cross member 28 is structured to include a front wall portion (not illustrated) that structures the front end portion in the vehicle longitudinal direction and extends in the vehicle transverse direction and the vehicle vertical direction, a rear wall portion 28A that is disposed so as to face the front wall portion and structures the rear end portion in the vehicle longitudinal direction and extends in the vehicle transverse direction and the vehicle vertical direction, an upper wall portion 28B that connects the upper end of the front wall portion and the upper end of the rear wall portion 28A and extends in the vehicle transverse direction and the vehicle longitudinal direction, and a lower wall portion 28C that connects the lower end of the front wall portion and the lower end of the rear wall portion 28A and extends in the vehicle transverse direction and the vehicle longitudinal direction.

Both end portions in the extending direction of the cross member 28 are joined (connected) by welding or the like to inner wall portions 42 (described later) of the rockers 14 in a state of abutting the inner wall portions 42. Note that, although not illustrated, the cross member 28 may be joined to the rockers 14 via brackets or the like.

Further, although not illustrated, there are cases in which, at the other cross members, a front flange portion that is joined to the upper surface of the floor portion 25 juts-out from the lower end of the front wall portion toward the vehicle front side, and a rear flange portion that is joined to the upper surface of the floor portion 25 juts-out from the lower end of the rear wall portion 28A toward the vehicle rear side, and a closed cross-sectional portion is formed between the other cross member and the floor portion 25. Note that, in this case, flange portions for joining to the rockers 14 may be formed at both end portions in the extending directions of the cross members.

### Rockers 14

The rockers 14 are described next.

For example, the rockers 14 in the present embodiment are formed of a metal such as an aluminum alloy, and are formed by extrusion or drawing. The rocker 14 is structured to include an inner rocker portion (first closed cross-sectional member) 38 structuring the vehicle transverse direction inner side of the rocker 14, and an outer rocker portion (second closed cross-sectional member) 40 structuring the vehicle transverse direction outer side of the rocker 14. Note that the inner rocker portion 38 and the outer rocker portion 40 are disposed so as to be lined-up in the vehicle transverse direction.

### Inner Rocker Portion

In the present embodiment, the cross-sectional shape, which is cut along the vehicle transverse direction and the vehicle vertical direction, of the inner rocker portion 38 is formed in the shape of a rectangular tube whose length direction is the vehicle vertical direction. The inner rocker portion 38 is structured to include the inner wall portion 42 provided at the vehicle transverse direction inner side and extending in the vehicle longitudinal direction and the vehicle vertical direction, an outer wall portion (vertical wall portion) 44 provided at the vehicle transverse direction outer side so as to face the inner wall portion 42 and extending in the vehicle longitudinal direction and the vehicle vertical direction, an upper wall portion 46 connecting the upper end of the inner wall portion 42 and the upper end of the outer wall portion 44 together and extending in the vehicle transverse direction and the vehicle longitudinal direction, and a lower wall portion (first lower wall portion) 48 facing the upper wall portion 46 and connecting the lower end of the inner wall portion 42 and the lower end of the outer wall portion 44 together and extending in the vehicle transverse direction and the vehicle longitudinal direction.

At the inner rocker portion 38, a first closed cross-sectional portion 50 is structured by the inner wall portion 42, the outer wall portion 44, the upper wall portion 46 and the lower wall portion 48. Note that the "first closed cross-sectional portion 50" here does not necessarily have to be a completely closed cross-sectional shape. For example, hole portions may be formed therein at portions fastened to other members.

Further, a cross portion (third load transmitting portion) 52 and a cross portion (first load transmitting portion) 54 extend in the vehicle transverse direction and the vehicle longitudinal direction at the inner rocker portion 38 and between the inner wall portion 42 and the outer wall portion 44. Both ends in the extending directions of the cross portions 52, 54 are connected to the inner wall portion 42 and the outer wall portion 44, respectively. The first closed cross-sectional portion 50 is partitioned by the cross portions 52, 54 into closed cross-sectional portions 56, 58, 60, in that order from the top in the vehicle vertical direction.

Here, in the present embodiment, the cross portion 52 overlaps the upper wall portion 28B of the cross member 28, and the cross portion 54 overlaps the lower wall portion 28C of the cross member 28, in the vehicle vertical direction as seen in a vehicle side view. Namely, the cross portions 52, 54 of the inner rocker portion 38 overlap the cross member 28 in the vehicle vertical direction as seen in a vehicle side view.

Note that it suffices for the "overlap" in the present embodiment to be such that at least portions of the cross member 28 and the cross portions 52, 54 of the inner rocker portion 38 overlap one another in the vehicle vertical direction as seen in a vehicle side view.

The plate thickness of the cross portion 54 along the vehicle vertical direction is thicker than those of the upper wall portion 46, the cross portion 52 and the lower wall portion 48. Further, the cross portion 54 is structured to include a horizontal portion 54A and a curved portion 54B. The horizontal portion 54A is provided at the inner wall portion 42 side and is formed substantially along the horizontal direction. The curved portion 54B is provided at the vehicle transverse direction outer side of the horizontal portion 54A, and is curved so as to bulge out toward the vehicle vertical direction lower side along the vehicle transverse direction.

Note that, as described above, the curved portion 54B is curved so as to bulge out toward the vehicle vertical direction lower side. However, over substantially the entire region of the curved portion 54B in the vehicle transverse direction, at least a portion thereof overlaps the horizontal portion 54A in the vehicle vertical direction as seen in a vehicle side view.

The plate thicknesses of the inner wall portion 42 and the outer wall portion 44 of the inner rocker portion 38 are thicker at the closed cross-sectional portion 58 than at the closed cross-sectional portions 56, 60. On the other hand, the lower wall portion 48 is provided at the closed cross-sectional portion 60 of the inner rocker portion 38. The flange portion 20A and the flange portion 22A of the battery pack 16 are fixed (fastened) to this lower wall portion 48 via a fastening member 61 such as a bolt (fastening portion (fixing point) 62).

A cut-out portion (second weak portion) 64, which is cut out in a substantial U-shape and whose vehicle upper side is open, is formed in the lower wall portion 48 at further toward the vehicle transverse direction outer side than the fastening portion 62. Note that a portion of the cut-out portion 64 is the outer wall portion 44.

### Outer Rocker Portion

On the other hand, in the present embodiment, the cross-sectional shape, which is cut along the vehicle transverse direction and the vehicle vertical direction, of the outer rocker portion 40 is formed in the shape of a rectangular tube. The outer rocker portion 40 is structured to include an inner wall portion 66 provided at the vehicle transverse direction inner side and extending in the vehicle longitudinal direction and the vehicle vertical direction, an outer wall portion 68 provided at the vehicle transverse direction outer side so as to face the inner wall portion 66 and extending in the vehicle longitudinal direction and the vehicle vertical direction, an upper wall portion 70 connecting the upper end of the inner wall portion 66 and the upper end of the outer wall portion 68 together and extending in the vehicle transverse direction and the vehicle longitudinal direction, and a lower wall portion (second lower wall portion, second load transmitting portion) 72 facing the upper wall portion 70 and connecting the lower end of the inner wall portion 66 and the lower end of the outer wall portion 68 together and extending in the vehicle transverse direction and the vehicle longitudinal direction.

At the outer rocker portion 40, a second closed cross-sectional portion 74 is structured by the inner wall portion 66, the outer wall portion 68, the upper wall portion 70 and the lower wall portion 72. Note that, in the same way as the "first closed cross-sectional portion 50", the "second closed cross-sectional portion 74" here does not necessarily have to be a completely closed cross-sectional shape. For example, hole portions may be formed therein at portions fastened to other members.

In the present embodiment, the upper wall portion 70 of the outer rocker portion 40 is curved so as to bulge out toward the vehicle vertical direction lower side, and the lower wall portion 72 of the outer rocker portion 40 is curved so as to bulge out toward the vehicle vertical direction upper side. The lower wall portion 72 of the outer rocker portion 40 is disposed further toward the vehicle vertical direction upper side than the lower wall portion 48 of the inner rocker portion 38.

Plate thickness t1 of the cross portion 54 of the inner rocker portion 38 is thicker than plate thickness t2 of the lower wall portion 72 of the outer rocker portion 40 (t1 > t2). Further, in the present embodiment, a hanging-down portion 76, which juts-out from the second closed cross-sectional portion 74 and hangs down toward the vehicle lower side, is provided at the inner wall portion 66 side. Note that this hanging-down portion 76 is not absolutely necessary.

Here, in the present embodiment, the upper wall portion 70 of the outer rocker portion 40 overlaps the cross portion 52 of the inner rocker portion 38, and the lower wall portion 72 of the outer rocker portion 40 overlaps the cross portion 54 of the inner rocker portion 38, in the vehicle vertical direction as seen in a vehicle side view.

Note that, as described above, the upper wall portion 70 of the outer rocker portion 40 is curved downward in the vehicle vertical direction, and the lower wall portion 72 is curved upward in the vehicle vertical direction. However, over substantially the entire region of the upper wall portion 70, the lower wall portion 72 in the vehicle transverse direction, at least a portion thereof overlaps the cross portion 52, the cross portion 54 in the vehicle vertical direction as seen in a side view, respectively.

In the present embodiment, a rocker outer 78 extends along the vehicle longitudinal direction at the vehicle transverse direction outer side of the outer rocker portion 40. For example, this rocker outer 78 is structured to include an outer member 80 whose cross-sectional shape cut along the vehicle transverse direction and the vehicle vertical direction is a hat shape whose vehicle transverse direction inner side is open, and an inner member 82 that is disposed between the inner rocker portion 38 and the outer rocker portion 40 and extends along the vehicle longitudinal direction and the vehicle vertical direction. At the rocker outer 78, a closed cross-sectional portion 84 is formed between the inner member 82 and the outer member 80. Note that the rocker outer 78 is not absolutely necessary. In a case in which the rocker outer 78 does not exist, the inner rocker portion 38 and the outer rocker portion 40 are joined together in a state of being adjacent to one another.

### Operation and Effects of Vehicle Lower Portion Structure

Operation and effects of the vehicle lower portion structure are described next.

In the present embodiment, as illustrated in Fig. 1, the vehicle 10 to which the vehicle lower portion structure is applied has the pair of left and right rockers 14, the battery pack 16 and the cross members 28. The pair of left and right rockers 14 are provided at the vehicle lower portion 12 and the vehicle transverse direction both side portions, and extend in the vehicle longitudinal direction. The battery pack 16 is disposed between the pair of left and right rockers 14. The cross members 28 are disposed further toward the vehicle vertical direction upper side than the battery pack 16, and extend in the vehicle transverse direction, and both end portions in the extending directions of the cross members 28 are connected to the pair of left and right rockers 14, respectively.

Here, in the present embodiment, the rockers 14 have the inner rocker portions 38 and the outer rocker portions 40. The inner rocker portions 38 are disposed at the vehicle transverse direction inner sides of the rockers 14 and structure the first closed cross-sectional portions 50. The battery pack 16 is fixed to the inner rocker portions 38. On the other hand, the outer rocker portions 40 are disposed at the vehicle transverse direction outer sides of the inner rocker portions 38 and structure the second closed cross-sectional portions 74.

The inner rocker portion 38 is structured to include the cross portion 54 that serves as a first load transmitting portion that can transmit load at the time of a side collision of the vehicle 10. This cross portion 54 extends in the vehicle transverse direction, and is disposed at a position overlapping the cross member 28 in the vehicle vertical direction as seen in a vehicle side view.

On the other hand, the outer rocker portion 40 is structured to include the lower wall portion 72 that serves as the second load transmitting portion that can transmit load at the time of a side collision of the vehicle 10. This lower wall portion 72 extends in the vehicle transverse direction, and is disposed at a position overlapping, in the vehicle vertical direction as seen in a vehicle side view, the cross portion 54 that is provided at the inner rocker portion 38.

Namely, in the present embodiment, at the rocker 14, the outer rocker portion 40 and the inner rocker portion 38 are provided in that order from the vehicle transverse direction outer side. The lower wall portion 72 of the outer rocker portion 40, the cross portion 54 of the inner rocker portion 38, and the cross member 28 overlap in the vehicle vertical direction as seen in a vehicle side view.

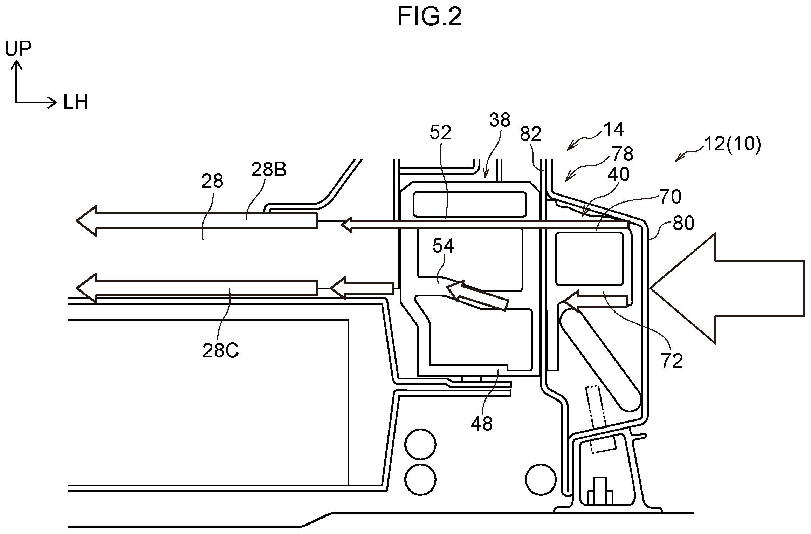

Therefore, at the time of a side collision of the vehicle 10, as illustrated in Fig. 2, the load at the initial stage of the collision is inputted to the outer rocker portion 40 that is provided at the vehicle transverse direction outer side at the rocker 14. The load inputted to the outer rocker portion 40 is transmitted from the lower wall portion 72 of the outer rocker portion 40 to the cross portion 54 of the inner rocker portion 38. Then, the load transmitted to the cross portion 54 of the inner rocker portion 38 is transmitted via the cross portion 54 to the cross member 28.

In this way, when the load of the initial stage of the collision is transmitted to the cross member 28, reaction force from the cross member 28 is obtained, and the inner rocker portion 38 and the outer rocker portion 40 that structure the rocker 14 deform, and the collision energy can be absorbed effectively.

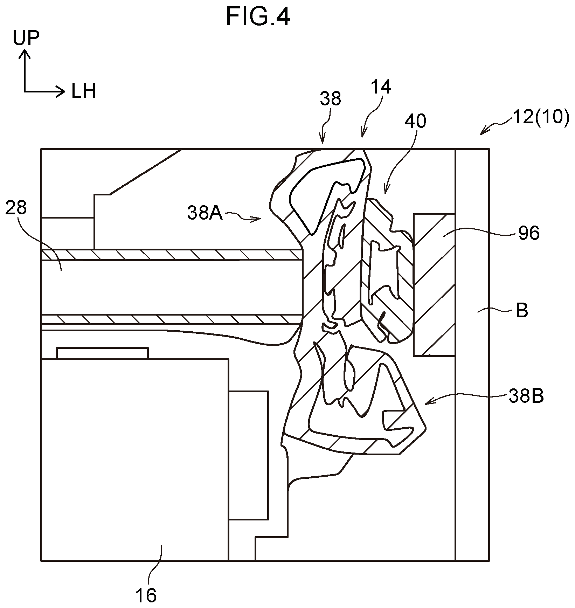

Further, the load that is transmitted to the cross member 28 is transmitted toward the rocker 14 that is disposed at the side opposite the rocker 14 to which load was inputted at the time of the side collision of the vehicle 10. Namely, the load is dispersed via the cross member 28. Further, when load is inputted to the rocker 14 at the time of a side collision of the vehicle 10, reaction force from the cross member 28 is obtained, and penetration of the collision member (hereinafter called "barrier") B (see Fig. 4) in toward the vehicle transverse direction inner side is suppressed.

Accordingly, in the present embodiment, at the time of a side collision of the vehicle 10, the load at the initial stage of the collision can be transmitted to only the cross member 28, and can be suppressed so as to not be transmitted to the battery pack 16. As a result, in the present embodiment, the battery pack 16 can be protected.

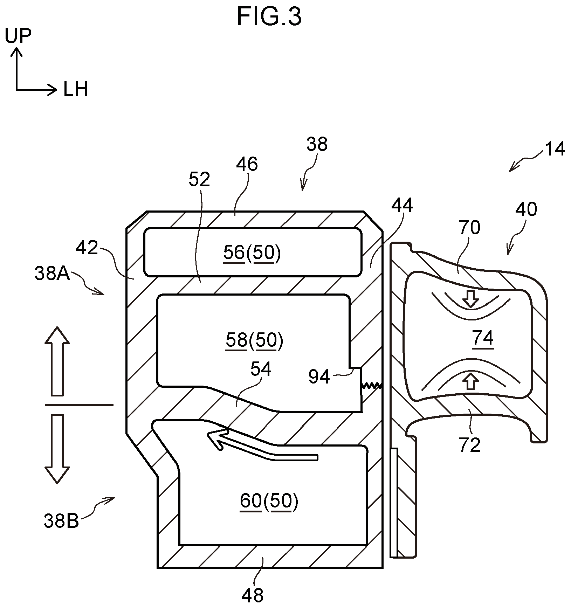

To describe this more concretely, in the present embodiment, as illustrated in Fig. 1, the lower wall portion 48 of the inner rocker portion 38 is disposed further downward in the vehicle vertical direction than the lower wall portion 72 of the outer rocker portion 40. Due thereto, in the present embodiment, at the inner rocker portion 38, the functions are divided between an upper portion 38A (see Fig. 3) of the inner rocker portion 38 that is further toward the upper side in the vehicle vertical direction than the lower wall portion 72 of the outer rocker portion 40, and a lower portion 38B (see Fig. 3) of the inner rocker portion 38 that is further toward the lower side than the lower wall portion 72.

Namely, in the present embodiment, at the time of a side collision of the vehicle 10, at the upper portion 38A side of the inner rocker portion 38, it is made such that load is transmitted, and collision energy is absorbed, and, at the lower portion 38B side of the inner rocker portion 38, the battery pack 16 can be protected. Due thereto, in the present embodiment, at the time of a side collision of the vehicle 10, the load in the initial stage of the collision being transmitted from the lower wall portion 72 of the outer rocker portion 40 to the lower wall portion 48 of the inner rocker portion 38 can be suppressed.

Here, the battery pack 16 is fixed to the lower wall portion 48 of the inner rocker portion 38. Therefore, in the present embodiment, at the time of a side collision of the vehicle 10, the load in the initial stage of the collision being transmitted to the battery pack 16 can be suppressed.

Moreover, in the present embodiment, the second load transmitting portion is the lower wall portion 72 of the outer rocker portion 40. At the time of a side collision of the vehicle 10, the load in the initial stage of the collision that is inputted to the outer rocker portion 40 is transmitted from the lower wall portion 72 of the outer rocker portion 40 to the cross portion 54 of the inner rocker portion 38.

Due thereto, at the time of a side collision of the vehicle 10, it can be made such that load is transmitted to the upper portion 38A side of the inner rocker portion 38, and it can be made such that load is not transmitted to the lower portion 38B side of the inner rocker portion 38, and the battery pack 16 can be protected.

Further, in the present embodiment, the plate thickness t1 of the cross portion 54 of the inner rocker portion 38 is thicker than the plate thickness t2 of the lower wall portion 72 of the outer rocker portion 40 (t1 > t2). Therefore, at the time of a side collision of the vehicle 10, when the collision load is transmitted via the cross portion 54 to the cross member 28 and reaction force is received from the cross member 28, the lower wall portion 72 side of the outer rocker portion 40 deforms before the cross portion 54 side of the inner rocker portion 38. Due thereto, collision energy is absorbed (so-called EA).

Namely, in the present embodiment, due to the lower wall portion 72 side of the outer rocker portion 40 deforming before the cross portion 54 side of the inner rocker portion 38, at the time of a side collision of the vehicle 10, energy can be absorbed at the rocker 14 in order from the vehicle transverse direction outer side, and the efficiency of absorbing collision energy can be improved.

On the other hand, in the present embodiment, in a cross-sectional shape that is cut along the vehicle transverse direction and the vehicle vertical direction, the cross portion 54 is curved toward the vehicle vertical direction lower side. Due thereto, at the time of a side collision of the vehicle 10, the cross portion 54 can be deformed toward the vehicle vertical direction lower side. Namely, in the present embodiment, the deformation mode of the inner rocker portion 38 is controlled, and the collision energy absorbing ability can be improved.

Note that, although the cross portion 54 is curved toward the vehicle vertical direction lower side, even if the cross portion is inclined toward the vehicle vertical direction lower side on progression toward the vehicle transverse direction outer side, there are substantially the same effects as the case in which the cross portion 54 is curved toward the vehicle vertical direction lower side.

Moreover, from the standpoint of deforming the cross portion 54 toward a predetermined direction at the time of a side collision of the vehicle 10, it suffices for the cross portion 54 to be curved toward the predetermined direction or to be inclined with respect to a direction intersecting the vehicle transverse direction. By deforming the cross portion 54 toward a predetermined direction, the collision energy absorbing ability can be improved.

Further, in the present embodiment, the upper wall portion 70 of the outer rocker portion 40 is curved toward the vehicle vertical direction lower side, and the lower wall portion 72 of the outer rocker portion 40 is curved toward the vehicle vertical direction upper side. Due thereto, in the present embodiment, at the time of a side collision of the vehicle 10, the upper wall portion 70 of the outer rocker portion 40 can be deformed toward the vehicle vertical direction lower side, and the lower wall portion 72 of the outer rocker portion 40 can be deformed toward the vehicle vertical direction upper side.

Namely, in the present embodiment, at the time of a side collision of the vehicle 10, the deformation mode of the outer rocker portion 40 is controlled, and the upper wall portion 70 and the lower wall portion 72 can be deformed toward the interior of the second closed cross-sectional portion 74. By deforming the outer rocker portion 40 in this way and causing the upper wall portion 70 and the lower wall portion 72 to bend toward the inner side of the outer rocker portion 40 (so-called inward bending), the outer rocker portion 40 penetrating in toward the battery pack 16 that is fixed to the inner rocker portion 38 can be suppressed. Note that a weak portion such as a cut-out may be formed at the place that is to become the point of origin of the inward bending.

Note that, even if the upper wall portion 70 of the outer rocker portion 40 is inclined toward the vehicle vertical direction lower side, and the lower wall portion 72 of the outer rocker portion 40 is inclined toward the vehicle vertical direction upper side, there are substantially the same effects as a case in which the upper wall portion 70 is curved toward the vehicle vertical direction lower side and the lower wall portion 72 is curved toward the vehicle vertical direction upper side.

Moreover, from the standpoint of deforming the upper wall portion 70 and the lower wall portion 72 of the outer rocker portion 40 toward predetermined directions at the time of a side collision of the vehicle 10, it suffices for the upper wall portion 70 and the lower wall portion 72 to be curved toward the predetermined directions or to be inclined with respect to directions intersecting the vehicle transverse direction. By deforming the upper wall portion 70 and the lower wall portion 72 toward predetermined directions, the collision energy absorbing ability can be improved.

In the present embodiment, the cut-out portion 64 is provided in the inner rocker portion 38. The cut-out portion 64 is provided at a position that is further toward the vehicle transverse direction outer side than the fastening portion 62 at which the battery pack 16 is fixed, and has lower rigidity than that of other regions at the inner rocker portion 38.

Therefore, at the time of breaking, the inner rocker portion 38 breaks with the cut-out portion 64 being the point of origin. Because the cut-out portion 64 is provided at a position that is further toward the vehicle transverse direction outer side than the fastening portion 62 at which the battery pack 16 is fixed, at the time of a side collision of the vehicle 10, it is possible to suppress the load such that load is not transmitted via the fastening portion 62 toward the battery pack 16 side.

Note that, here, description has been given of an example in which the cut-out portion 64 is formed as the second weak portion in the inner rocker portion 38, but it suffices for, at positions of the inner rocker portion 38 that are further toward the vehicle transverse direction outer side than the fastening portion 62, the rigidity to be lower than that of the other regions of the inner rocker portion 38. Therefore, it is not absolutely necessary for the second weak portion to be the cut-out portion 64, and, for example, a thin-walled portion or a through-hole may be formed instead of the cut-out portion 64.

On the other hand, in the present embodiment, the inner rocker portion 38 is structured to further include the cross portion 52. This cross portion 52 overlaps the upper wall portion 70 of the outer rocker portion 40 and the cross member 28 in the vehicle vertical direction as seen in a vehicle side view.

Due thereto, in the present embodiment, at the time of a side collision of the vehicle 10, the load at the time of the initial stage of the collision that is inputted to the outer rocker portion 40 is transmitted from the lower wall portion 72 of the outer rocker portion 40 to the cross portion 54 of the inner rocker portion 38, and is transmitted from the upper wall portion 70 of the outer rocker portion 40 to the cross portion 52 of the inner rocker portion 38.

In the present embodiment, load is transmitted to the cross member 28 via the cross portion 54 and the cross portion 52 of the inner rocker portion 38, respectively. Therefore, the ability to transmit load to the cross member 28 improves. Note that the cross portion 54 does not absolutely have to overlap the upper wall portion 70 of the outer rocker portion 40 in the vehicle vertical direction as seen in a vehicle side view.

### Supplementary Points relating to the Embodiment

As illustrated in Fig. 1, in the above-described embodiment, at the battery pack 16, the cross-sectional shapes of the upper case 20 and the lower case 22 are hat-shaped, and the flange portion 20A, the flange portion 22A of the upper case 20, the lower case 22 are joined together. Further, via the flange portion 20A and the flange portion 22A, the battery pack 16 is fixed to the lower wall portion 48 of the inner rocker portion 38 via the fastening portion 62.

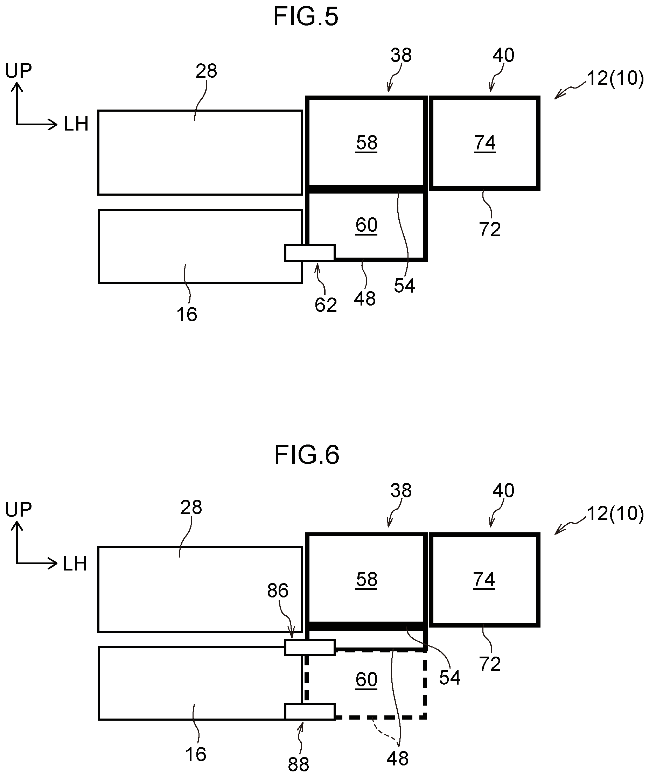

Namely, in the above-described embodiment, as illustrated in Fig. 1 and Fig. 5, the fastening portion 62 is provided at the substantially central portion in the vehicle vertical direction of the battery pack 16. However, the position of the fastening portion 62 can be changed appropriately in accordance with the shapes of the upper case 20 and the lower case 22. Note that Fig. 5 is a drawing in which the fastening portion 62, which fastens the battery pack 16 shown in Fig. 1 to the inner rocker portion 38, is illustrated schematically.

For example, as modified example 1, as illustrated in Fig. 6, a fastening portion 86 may be provided at the upper end portion of the battery pack 16, and a fastening portion 88 may be provided at the lower end portion of the battery pack 16. Note that, in this case, the position of the lower wall portion 48 of the inner rocker portion 38 as well is changed along the vehicle vertical direction in accordance with the positions of the fastening portions 86, 88. Further, the sectional surface area of the closed cross-sectional portion 60 also differs depending on the position of the lower wall portion 48 of the inner rocker portion 38.

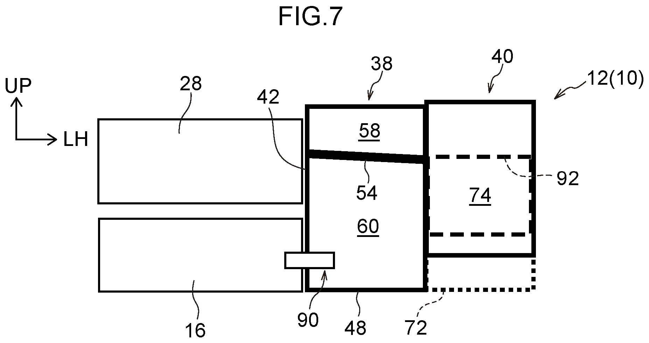

Further, in the structure illustrated in Fig. 1 and Fig. 5, the battery pack 16 is fixed to the lower wall portion 48 of the inner rocker portion 38 via the fastening portion 62. However, as modified example 2, as illustrated in Fig. 7, a fastening portion 90 by which the battery pack 16 is fixed to the inner wall portion 42 of the inner rocker portion 38 may be provided.

Further, in the structure illustrated in Fig. 1 and Fig. 5, as the first load transmitting portion, the cross portion 54 overlaps the lower wall portion 28C of the cross member 28 in the vehicle vertical direction as seen in a vehicle side view. However, because it suffices for the load at the initial stage of a collision to be transmitted toward the cross member 28 side at the time of a side collision of the vehicle 10, the first load transmitting portion is not limited to this.

For example, although not illustrated, the cross portion 54 may overlap the vehicle vertical direction substantially central portion of the cross member 28 in the vehicle vertical direction as seen in a vehicle side view. In this case, at the time of a side collision of the vehicle 10, even if the vehicle transverse direction inner end side of the cross portion 54 becomes offset in the vehicle vertical direction, the load at the initial stage of the collision can be transmitted toward the cross member 28 side.

Further, in the structure illustrated in Fig. 1 and Fig. 5, at the outer rocker portion 40, the region that overlaps the cross portion 54 of the inner rocker portion 38 in the vehicle vertical direction as seen in a vehicle side view is the lower wall portion 72, but does not necessarily have to be the lower wall portion 72. For example, as illustrated in Fig. 7, the region that overlaps the cross portion 54 of the inner rocker portion 38 in the vehicle vertical direction as seen in a vehicle side view may be an upper wall portion (second load transmitting portion) 92 that structures the upper end of the outer rocker portion 40.

Note that it suffices for the outer rocker portion 40 to overlap the cross portion 54 of the inner rocker portion 38 in the vehicle vertical direction as seen in a vehicle side view. Therefore, the overlapping region is not limited to the upper wall portion 92 or the lower wall portion 72, and may be a partitioning wall that partitions the interior of the closed cross-sectional portion 74 up and down in the vehicle vertical direction.

Further, in the structure illustrated in Fig. 1 and Fig. 5, the lower wall portion 72 of the outer rocker portion 40 is disposed further toward the vehicle vertical direction upper side than the lower wall portion 48 of the inner rocker portion 38, but the present disclosure is not limited to this. For example, as illustrated in Fig. 7, the lower wall portion 72 of the outer rocker portion 40 may be formed so as to overlap the lower wall portion 48 of the inner rocker portion 38 in the vehicle vertical direction as seen in a vehicle side view. In this case, a weak portion may be provided in the lower wall portion 72 of the outer rocker portion 40 so that load is not transmitted toward the lower wall portion 48 side at the time of a side collision of the vehicle 10.

On the other hand, in the above-described embodiment, a cut-out portion (first weak portion) 94 may be formed in the outer wall portion (vertical wall portion) 44 that is provided between the first closed cross-sectional portion 50 and the second closed cross-sectional portion 74 provided at the outer rocker portion 40, as modified example 3 and as illustrated in Fig. 3. This cut-out portion 94 is cut-out in a substantial U-shape whose inner wall portion 42 side is open, and the rigidity thereof is lower than that of the other region at the outer wall portion 44 that structures the closed cross-sectional portion 56.

By forming the cut-out portion 94 at the outer wall portion 44 in this way, at the time when the inner rocker portion 38 breaks, the outer wall portion 44 breaks toward the interior of the first closed cross-sectional portion 50 with the cut-out portion 94 being the point of origin. Namely, the outer wall portion 44 of the inner rocker portion 38 can be bent inwardly toward the interior of the first closed cross-sectional portion 50.

Due thereto, in the present embodiment, as illustrated in Fig. 4, at the time when the inner rocker portion 38 breaks, deformation between the inner rocker portion 38 and the outer rocker portion 40 is not impeded, and the collision energy can be absorbed efficiently. Moreover, the outer rocker portion 40 can be accommodated within the first closed cross-sectional portion 50 that is provided in the inner rocker portion 38. Namely, the outer rocker portion 40 becomes a state of being enveloped by the inner rocker portion 38.

In particular, due to the outer rocker portion 40 bending inwardly and the cross portion 54 of the inner rocker portion 38 deforming toward a predetermined direction, a state in which the outer rocker portion 40 is enveloped by the inner rocker portion 38 can be realized. Due to the outer rocker portion 40 being enveloped by the inner rocker portion 38 in this way, it can be made such that load is not transmitted toward the lower portion 38B (see Fig 3) side of the inner rocker portion 38. Further, at the upper portion 38A (see Fig. 3) side of the inner rocker portion 38, impact energy can be absorbed by the deformation of the cross portion (the first load transmitting portion) 54 of the inner rocker portion 38 and the outer rocker portion 40.

Note that, here, description has been given of an example in which the cut-out portion 94 is formed in the outer wall portion 44 as the first weak portion as illustrated in Fig. 3. However, it suffices for the rigidity to be lower than that of the other region of the outer wall portion 44 that structures the closed cross-sectional portion 58. Therefore, it is not absolutely necessary for the first weak portion to be the cut-out portion 94, and, for example, a thin-walled portion or a through-hole may be formed instead of the cut-out portion 94.

Moreover, as illustrated in Fig. 1, a spacer 96 may be provided further toward the vehicle transverse direction outer side than the outer rocker portion 40. The spacer 96 is disposed at the interior of the side door 36 and is disposed at a position that overlaps the outer rocker portion 40 in the vehicle vertical direction as seen in a vehicle side view.

Therefore, in the present embodiment, at the time of a side collision of the vehicle 10, the load in the initial stage of the collision is inputted via the spacer 96 to the outer rocker portion 40 of the rocker 14, and is transmitted via the outer rocker portion 40 to the inner rocker portion 38. Then, the load is transmitted to the cross member 28 via the cross portion 54 of the first closed cross-sectional portion 50.

Namely, in the present embodiment, the load in the initial stage of the collision can be reliably transmitted via the spacer 96 to the outer rocker portion 40, and the ability to transmit load toward the cross member 28 side improves. Further, in the present embodiment, movement of the side door 36 that is provided at the vehicle side portion 30 is limited, and the lower end portion of the side door 36 can be restrained so as to not abut the battery pack 16. Due thereto, in the present embodiment, the battery pack 16 can be protected.

Note that it suffices for the spacer 96 to be disposed at a position that overlaps the outer rocker portion 40 in the vehicle vertical direction as seen in a vehicle side view. Therefore, the spacer 96 does not necessarily have to be disposed within the side door 36, and may be disposed between the side door 36 and the outer rocker portion 40. Moreover, the spacer 96 is not absolutely necessary.

On the other hand, in the present embodiment, the inner rocker portion 38 and the outer rocker portion 40 are molded integrally. Due to the inner rocker portion 38 and the outer rocker portion 40 being molded integrally in this way, a reduction in the number of parts can be devised, and assembly work for assembling the outer rocker portion 40 to the inner rocker portion 38 is omitted. Note that the shapes of the inner rocker portion 38 and the outer rocker portion 40 are not limited to those of the above-described embodiment and can be changed appropriately.

The inner rocker portion 38 and the outer rocker portion 40 may, of course, be molded as separate parts. In this case, the materials of the inner rocker portion 38 and the outer rocker portion 40 can be made to differ. Further, by molding the inner rocker portion 38 and the outer rocker portion 40 as separate parts, it is possible to replace only the outer rocker portion 40.

Although an example of an embodiment of the present disclosure has been described above, embodiments of the present disclosure are not limited to the above, and the embodiment and various modified examples may be combined appropriately. The present disclosure can, of course, be implemented in various forms within a scope that does not depart from the gist thereof.

## Claims

1. A vehicle lower portion structure comprising:
a pair of left and right frame portions (14, 38, 40) that are provided at a lower portion of, and at vehicle transverse direction both side portions of, a vehicle (10), and that extend in a vehicle longitudinal direction;
a battery pack (16) disposed between the pair of left and right frame portions; and
a cross member (28) disposed further toward a vehicle vertical direction upper side than the battery pack (16), and extending in a vehicle transverse direction, both end portions of the cross member (28) in an extending direction being connected to the pair of left and right frame portions (14, 38, 40) respectively,
wherein each frame portion (14, 38, 40) has:
a first closed cross-sectional member (38) that is disposed at a vehicle transverse direction inner side of a frame portion main body (14), that, in a cross-sectional shape cut along the vehicle transverse direction and a vehicle vertical direction, structures a first closed cross-sectional portion (50), and to which the battery pack (16) is fixed; and
a second closed cross-sectional member (40) that is disposed further toward a vehicle transverse direction outer side than the first closed-cross-sectional member (38), and that, in a cross-sectional shape cut along the vehicle transverse direction and the vehicle vertical direction, structures a second closed cross-sectional portion (74),
wherein the first closed cross-sectional member (38) is structured to include a first load transmitting portion (54) that extends along the vehicle transverse direction, that is disposed at a position overlapping the cross member (28) in the vehicle vertical direction as seen in a vehicle side view, and that can transmit a load, and
wherein the second closed cross-sectional member (40) is structured to include a second load transmitting portion (72) that extends along the vehicle transverse direction, that is disposed at a position overlapping the first load transmitting portion (54) in the vehicle vertical direction as seen in a vehicle side view, and that can transmit a load.

2. The vehicle lower portion structure of claim 1, wherein a first lower wall portion (48) that structures a lower end portion of the first closed cross-sectional member (38) is disposed further toward a vehicle vertical direction lower side than a second lower wall portion (72) that structures a lower end portion of the second closed cross-sectional member (40).

3. The vehicle lower portion structure of claim 1 or claim 2, wherein the second load transmitting portion (72) is a second lower wall portion (72) that structures a lower end portion of the second closed cross-sectional member (40).

4. The vehicle lower portion structure of any one of claims 1 to 3, wherein a plate thickness of the first load transmitting portion (54) is thicker than a plate thickness of the second load transmitting portion (72).

5. The vehicle lower portion structure of any one of claims 1 to 4, wherein, in a cross-sectional shape that is cut along the vehicle transverse direction and the vehicle vertical direction, the first load transmitting portion (54) is curved toward an upper side or a lower side in the vehicle vertical direction or is inclined with respect to a direction intersecting the vehicle transverse direction.

6. The vehicle lower portion structure of any one of claims 1 to 5, wherein, in a cross-sectional shape that is cut along the vehicle transverse direction and the vehicle vertical direction, the first load transmitting portion (54) is curved toward a vehicle vertical direction lower side or is inclined toward a vehicle vertical direction lower side on progression toward a vehicle transverse direction outer side.

7. The vehicle lower portion structure of any one of claims 1 to 6, wherein an upper wall portion (70) that structures an upper end portion of the second closed cross-sectional member (40), and a second lower wall portion (72) that structures a lower end portion of the second closed cross-sectional member (40), are curved toward an upper side or a lower side in the vehicle vertical direction or are inclined with respect to directions intersecting the vehicle transverse direction.

8. The vehicle lower portion structure of any one of claims 1 to 7, wherein an upper wall portion (70) that structures an upper end portion of the second closed cross-sectional member (40) is curved toward a vehicle vertical direction lower side or is inclined toward a vehicle vertical direction lower side on progression toward a vehicle transverse direction outer side, and a second lower wall portion (72) that structures a lower end portion of the second closed cross-sectional member (40) is curved toward a vehicle vertical direction upper side or is inclined toward a vehicle vertical direction upper side on progression toward the vehicle transverse direction outer side.

9. The vehicle lower portion structure of any one of claims 1 to 8, wherein the first closed cross-sectional member (38) is structured to further include a third load transmitting portion (52) that, in the vehicle vertical direction and as seen in a vehicle side view, overlaps the cross member (28) and an upper wall portion (70) that structures an upper end portion of the second closed cross-sectional member (40).

10. The vehicle lower portion structure of any one of claims 1 to 9, wherein a first weak portion (94), whose rigidity is lower than other regions of the first closed cross-sectional member (38), is formed at the first closed cross-sectional member (38) at a vertical wall portion (44) that is disposed between the first closed cross-sectional portion (50) and the second closed cross-sectional portion (74) that is provided at the second closed cross-sectional member (40).

11. The vehicle lower portion structure of any one of claims 1 to 10, wherein a spacer (96), which is disposed at a position overlapping the second closed cross-sectional member (40) in the vehicle vertical direction as seen in a vehicle side view and which can transmit a load, is provided further toward a vehicle transverse direction outer side than the second closed cross-sectional member (40).

12. The vehicle lower portion structure of any one of claims 1 to 11, wherein the first closed cross-sectional member (38) and the second closed cross-sectional member (40) are molded integrally.

13. The vehicle lower portion structure of any one of claims 1 to 12, wherein a second weak portion (64), whose rigidity is lower than other regions of the first closed cross-sectional member (38), is formed at the first closed cross-sectional member (38) at a position further toward a vehicle transverse direction outer side than a fixing point (62, 86, 88, 90) at which the battery pack (16) is fixed.
